# EUROPÄISCHE PATENTSCHRIFT

(11) **EP 2 630 003 B1**
(45) Veröffentlichungstag und Bekanntmachung des Hinweises auf die Patenterteilung: **03.08.2016**
(21) Anmeldenummer: 11752117.9
(22) Anmeldetag: 26.08.2011
(51) Int. Cl.: B60N 2/07, B60N 2/08

(54) **LÄNGSEINSTELLER FÜR EINEN FAHRZEUGSITZ**
LONGITUDINAL ADJUSTOR FOR A VEHICLE SEAT
DISPOSITIF DE RÉGLAGE EN LONGUEUR POUR UN SIÈGE DE VÉHICULE

(30) Priorität: 21.10.2010 DE 102010049542
(43) Veröffentlichungstag der Anmeldung: 28.08.2013
(73) Patentinhaber: Johnson Controls Components GmbH & Co. KG, 67657 Kaiserslautern (DE)
(72) Erfinder: DILL, Thomas, 67699 Heiligenmoschel (DE); HAMMANN, Heinrich, 67806 Teschenmoschel (DE); ENNS, Viktor, 67655 Kaiserslautern (DE)
(74) Vertreter: Wilhelm, Wolfgang
(86) Internationale Anmeldenummer: PCT/EP2011/004304
(87) Internationale Veröffentlichungsnummer: WO 2012/052087

(56) Entgegenhaltungen:
- EP-A1- 0 752 338
- EP-A1- 0 842 808
- DE-A1-102005 039 540
- DE-C1- 10 041 605

## Beschreibung

Die Erfindung betrifft einen Längseinsteller für einen Fahrzeugsitz, insbesondere für einen Kraftfahrzeugsitz, mit den Merkmalen des Oberbegriffs des Anspruches 1.

Ein Längseinsteller dieser Art ist aus der DE 10 2006 021 884 B3 bekannt. Hierbei sind eine erste, mit der Fahrzeugstruktur verbundene Sitzschiene und eine zweite mit der Sitzstruktur verbundene Sitzschiene vorgesehen, welche sich wechselseitig umgreifen und relativ zueinander in Längsrichtung beweglich sind. Ferner sind eine Schienenverriegelung, welche weitgehend innerhalb des Schienenprofils angeordnet ist, und eine außerhalb des Schienenprofils angeordnete, bei Betätigung auf die Schienenverriegelung einwirkende Entriegelungsklappe vorgesehen. Die Entriegelungsklappe ist mittels eines Halters schwenkbar an der zweiten Sitzschiene gelagert.

Ferner ist aus der DE 10 2008 058 518 A1 eine Betätigungsanordnung für eine Schienenverriegelung bekannt, die einen Hebel aufweist, welcher dreh- oder schwenkbar an einer Sitzschiene gelagert ist, wobei der Hebel außerhalb der Sitzschienen form- und/oder stoffschlüssig mit der Entriegelung der Sitzschienen verbunden ist. Für die schwenkbare Anordnung kann der Hebel - beabstandet von der Entriegelung - von außen in eine Öffnung in der Sitzschiene eingesteckt werden. Der Hebel wirkt mit einem ebenfalls außerhalb der Sitzschienen angeordneten Clip zusammen, der seinerseits mit dem Entriegelungsmittel verbunden ist. Das Entriegelungsmittel weist einen durch einen Schlitz nach außen ragenden Vorsprung auf, welcher im Clip eingeklemmt ist.

Aus der DE 195 10 618 A1 ist ein Längseinsteller für einen Fahrzeugsitz mit zwei mit der Fahrzeugstruktur zu verbindenden ersten Sitzschienen und zwei mit dem Fahrzeugsitz zu verbindenden zweiten Sitzschienen bekannt, wobei eine erste und eine zweite Sitzschiene sich einander unter Bildung eines Schienenprofils wechselseitig umgreifen und relativ zueinander in Längsrichtung beweglich sind. Es ist eine die Sitzschienen miteinander verriegelnde Schienenverriegelung vorgesehen, wobei die Schienenverriegelung zumindest großteils innerhalb des durch die Sitzschienen gebildeten Schienenprofils angeordnet ist. Ferner sind eine Entriegelungseinheit und eine Betätigungsanordnung zur Betätigung der Entriegelungseinheit vorgesehen, wobei die Entriegelungseinheit nicht näher dargestellt, großteils innerhalb des durch die Sitzschienen gebildeten Schienenprofils angeordnet ist, und nur ein seitlich aus den zweiten Sitzschienen herausragender Hebelarm dargestellt ist. Ferner ist ein Kraftübertragungselement vorgesehen, welches die Betätigungsanordnung mit der Entriegelungseinheit verbindet. Hierbei ist das Kraftübertragungselement durch eine Querstange und zwei fest mit der Querstange verbundene Kipphebel gebildet. Die Querstange ist in Lagerstellen seitlich in den zweiten Sitzschienen gelagert, wobei hierfür einfache Bohrungen in den zweiten Sitzschienen vorgesehen sind, in welchen die Querstangenenden gelagert sind. Außerhalb der zweiten Sitzschienen sind die Kipphebel etwas beabstandet angeordnet und wirken mit ihrem einen Ende mit dem entsprechenden, aus dem Schienenprofil herausragenden Hebelarm der Entriegelungseinheit zusammen. Einer der beiden Kipphebel ist lang ausgebildet und bildet mit dem vom Hebelarm beabstandeten Ende den Handhebel der Betätigungsanordnung.

Ferner ist aus der DE 202 08 719 U1 ein Längseinsteller bekannt, bei dem zwischen dem Kraftübertragungselement und der Betätigungsanordnung eine Überlastsicherung vorgesehen ist, welche vor einer Überlastung in einer Richtung entgegen der normalen Betätigungsrichtung zum Entriegeln schützt. Diese Überlastsicherung gemäß einer Variante dieser Überlastsicherung ist vorgesehen, dass der Betätigungshebel im Falle einer Überlastung abknickt. In einer anderen Variant ist der Betätigungshebel exzentrisch zur Welle gelagert und liegt an einem exzentrisch ausgebildeten Teil der Welle an, vorgespannt durch eine Feder. Überschreitet das Drehmoment, das durch die auf den Betätigungshebel wirkende Kraft entgegen der normalen Betätigungsrichtung zum Entriegeln bewirkt wird, das Drehmoment der entgegenwirkenden Federkraft, so gelangt der Betätiungshebel außer Eingriff mit der Welle.

Aus der EP 0 752 338 B1 ist ein Fahrzeugsitz-Längseinsteller mit wenigstens einem mit der Fahrzeugstruktur zu verbindenden weiblichen Profil mit U-förmigem Querschnitt, das zwei Flügel aufweist, und einem mit dem Fahrzeugsitz zu verbindenden männlichen Profil, das längs zwischen den genannten Flügeln im genannten weiblichen Profil gleitet, und einer die Profile miteinander verriegelnden Verriegelung. Die Verriegelung ist im Wesentlichen innerhalb des durch die Profile umschlossenen Hohlraums angeordnet. Ferner sind eine Entriegelungseinrichtung und ein Gestänge zur Betätigung der Entriegelungseinrichtung vorgesehen. Die Entriegelungseinrichtung und das Gestänge sind im Wesentlichen innerhalb des durch die Sitzschienen umschlossenen Hohlraums angeordnet. Ferner ist eine Welle vorgesehen, welches das Gestänge mit der Entriegelungseinrichtung verbindet. Die Welle ist von der Seite her mit einem Ende in das männliche Profil eingeschoben und erstreckt sich in das männliche Profil hinein oder durch das männliche Profil hindurch. Innerhalb des männlichen Profils wirkt die Welle mit der Entriegelungseinrichtung zusammen. Hierbei ist eine formschlüssige Verbindung zwischen Welle und Entriegelungseinrichtung vorgesehen. Die Welle dient gleichzeitig der schwenkbaren Lagerung des Gestänges.

Der Erfindung liegt die Aufgabe zu Grunde, einen Längseinsteller der eingangs genannten Art zu verbessern. Diese Aufgabe wird erfindungsgemäß durch einen Längseinsteller mit den Merkmalen des Anspruches 1 gelöst. Vorteilhafte Ausgestaltungen sind Gegenstand der Unteransprüche.

Dadurch, dass das Kraftübertragungselement sich in die zweite Sitzschiene hinein oder durch die zweite Sitzschiene hindurch erstreckt, und gleichzeitig der schwenkbaren Lagerung der Betätigungsanordnung dient und die Entriegelungseinheit mindestens eine Seitenplatte aufweist, welche durch einen Hebelarm absenkbar ist, um die Schienenverriegelung außer Eingriff zu bringen, kann die Entriegelung für die Sitzschienen vollständig in das Schienenprofil verlagert werden, wo die gesamte Anordnung geschützt ist. Zudem wird der Platzbedarf für die Betätigung minimiert.

Das Kraftübertragungselement wird bevorzugt zumindest teilweise durch eine Welle gebildet, welche eine sich senkrecht zur Längsrichtung der Sitzschienen erstreckende Betätigungs-Schwenkachse aufweist, wobei das Kraftübertragungselement sich zumindest bis innerhalb der zweiten Sitzschiene erstreckt, insbesondere quer durch die zweite Sitzschiene hindurch. Erstreckt sich das Kraftübertragungselement durch die zweite Sitzschiene quer hindurch, so können seitliche Öffnungen in der Sitzschiene als Lagerstellen dienen. Insbesondere bevorzugt können in den Öffnungen Lager angeordnet sein, um die Reibung zu verringern.

Mindestens eines der Lager kann zusätzlich der Begrenzung der axialen Verschiebbarkeit des Kraftübertragungselements dienen.

Die Entriegelungseinheit weist bevorzugt mindestens einen Hebelarm auf, welcher vollständig innerhalb der zweiten Sitzschiene angeordnet ist und in Verbindung mit dem Kraftübertragungselement steht. Insbesondere bevorzugt ist der Hebelarm durch das Kraftübertragungselement um eine konzentrisch zum Kraftübertragungselement verlaufende Betätigungs-Schwenkachse verschwenkbar, wofür der Hebelarm auf dem Kraftübertragungselement sitzt, insbesondere bevorzugt formschlüssig. Der Formschluss kann beispielsweise durch ein Keilwellenprofil, insbesondere durch ein sternförmiges Keilwellenprofil erfolgen, jedoch sind auch beliebige andere Keilwellenprofile möglich, wie insbesondere quadratische, sechseckige, kreisförmige mit einem sehnenartig abgeschnittenen Bereich. Wird ein nicht punktsymmetrisches Profil verwendet, so lässt sich die Ausrichtung des Kraftübertragungselements zu den Hebelarmen einfach festlegen.

Vorzugsweise weist die Schienenverriegelung ein Führungsteil auf, welches an der zweiten Sitzschiene angebracht ist, welches Führungshülsen für Führungsfinger aufweist. Die Führungsfinger dienen der Führung von Verriegelungsplatten. Hierbei kann die Länge der Führungsfinger derart bemessen sein, dass sie auch in ihrer entsprechenden Endstellung (verriegelte Stellung) innerhalb der zweiten Sitzschiene enden, so dass die Zahl der in der zweiten Sitzschiene vorzusehenden Öffnungen verringert werden kann.

Insbesondere bevorzugt sind am Führungsteil Verriegelungsfedern vorgesehen, welche die Verriegelungsplatten in die Verriegelungsstellung ziehen. Diese Verriegelungsfedern können direkt in das Führungsteil eingegossen sein, aber auch auf beliebige andere Weise mit demselben verbunden sein.

Aus Symmetriegründen sind bevorzugt zwei auf dem Kraftübertragungselement sitzende Hebelarme vorgesehen. Diese sind besonders bevorzugt an einem Ende über einen Bügelbereich miteinander verbunden. Dieser Bügelbereich kann als Ansatzpunkt für eine Feder dienen, welche beispielsweise das Kraftübertragungselement vor einem Drehen in eine nicht erwünschte Richtung im Falle einer Fehlbedienung schützt.

Im Folgenden ist die Erfindung anhand eines in der Zeichnung dargestellten Ausführungsbeispiels näher erläutert. Es zeigen:

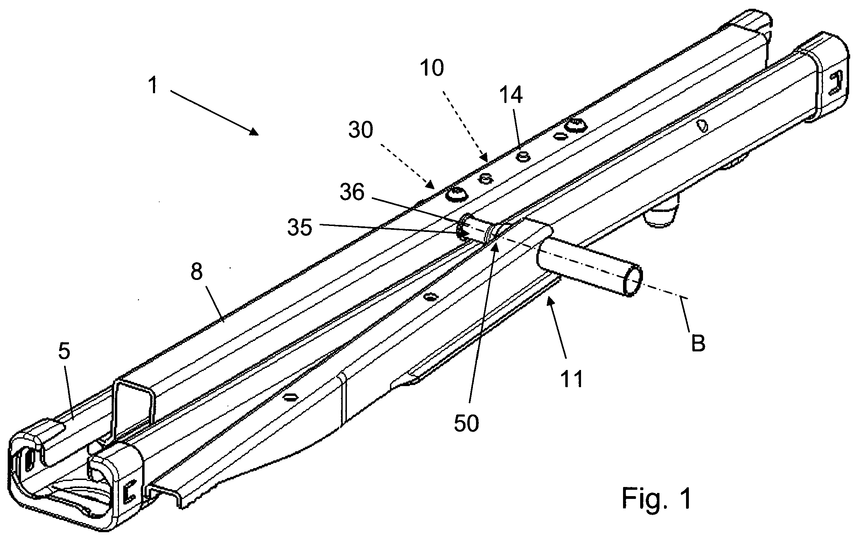

- Fig. 1: eine perspektivische Ansicht des Ausführungsbeispiels in verriegelter Stellung,
- Fig. 2: eine aufgerissene Seitenansicht von Fig. 1,
- Fig. 3: eine perspektivische, freigeschnittene Ansicht von Fig. 1 ,

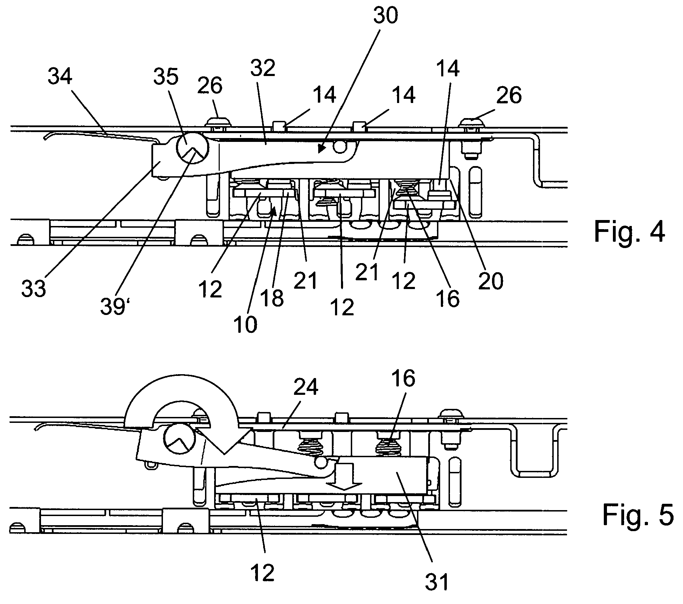

- Fig. 4: eine aufgerissene Seitenansicht des Verriegelungsbereichs im verriegelten Zustand,
- Fig. 5: eine Fig. 4 entsprechende Ansicht im entriegelten Zustand,

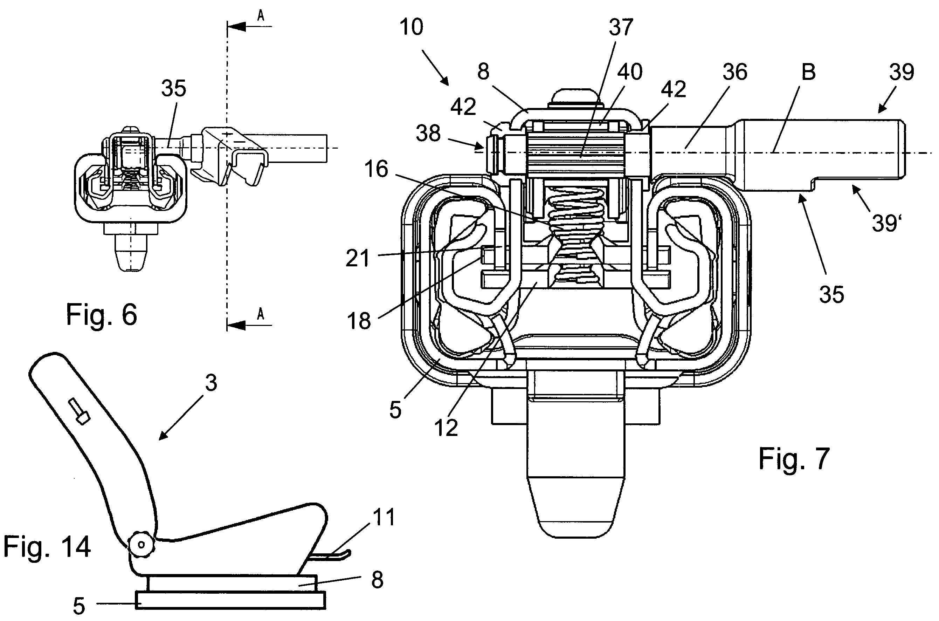

- Fig. 6: eine Ansicht des Ausführungsbeispiels mit Blick in Längsrichtung der Sitzschienen,
- Fig. 7: einen Schnitt quer durch den Verbindungsbereich,
- Fig. 8: eine entlang Linie A-A von Fig. 6 geschnittene Seitenansicht in verriegelter Stellung,
- Fig. 9: eine Detailansicht mit einer zusätzlichen ausschnittsweisen Vergrößerung von Fig. 8,
- Fig. 10: eine entlang Linie A-A von Fig. 6 geschnittene Seitenansicht in einer Fehlbedingungsstellung,
- Fig. 11: eine Detailansicht mit einer zusätzlichen ausschnittsweisen Vergrößerung von Fig. 10,

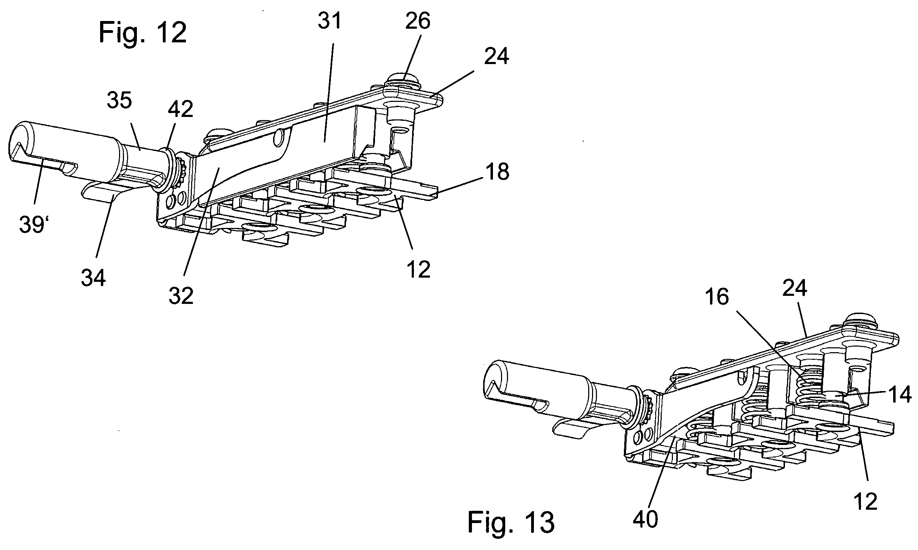

- Fig. 12: eine perspektivische Ansicht der Verriegelungseinheit samt Entriegelungsblock,
- Fig. 13: eine perspektivische Ansicht entsprechend Fig. 12 ohne Darstellung der Seitenplatten, und
- Fig. 14: eine schematische Seitenansicht eines Fahrzeugsitzes.

Ein Längseinsteller 1 eines Fahrzeugsitzes 3 in einem Kraftfahrzeug dient zur (manuellen) Längseinstellung, d.h. der Einstellung der Sitzlängsposition, des Fahrzeugsitzes 3. Auf jeder Fahrzeugsitzseite ist der Längseinsteller 1 mit einem Paar von Sitzschienen versehen, bestehend aus einer mit der Fahrzeugstruktur zu verbindenden ersten Sitzschiene 5 und einer mit dem Fahrzeugsitz zu verbindenden zweiten Sitzschiene 8. Die beiden Sitzschienen 5 und 8 umgreifen einander wechselseitig unter Bildung eines Schienenprofils und sind relativ zueinander in Längsrichtung beweglich, wobei zwischen den beiden Sitzschienen 5 und 8 zur Verringerung der Reibung Kugeln (nicht dargestellt) angeordnet sind. In der Anordnung des Ausführungsbeispiels steht die zweite Sitzschiene 8 nach oben (vertikal) über die erste Sitzschiene 5 über, was zusammen mit der Längsrichtung die verwendete Richtungsangaben definiert, jedoch ist im Prinzip auch ein seitlicher (horizontaler) Überstand möglich.

Die beiden Sitzschienen 5 und 8 sind mittels einer weitgehend innerhalb des Schienenprofils angeordneten Schienenverriegelung 10 miteinander verriegelbar, deren Prinzip in der DE 100 41 605 C1 beschrieben ist, deren Offenbarungsgehalt ausdrücklich einbezogen wird. Diese Schienenverriegelung 10 ist über eine außerhalb der Sitzschienen angeordnete Betätigungsanordnung 11 lösbar, welche einen Handgriff oder Bügel zum Hochziehen aufweist, der am vorderen Ende des Fahrzeugsitzes 3 vorragt.

Die Schienenverriegelung 10 weist mindestens eine Verriegelungsplatte 12 auf, welche mittels eines Führungsfingers 14 beweglich an der zweiten Sitzschiene 8 gelagert und mittels einer Verriegelungsfeder 16 gegen diese vorgespannt ist. Seitlich von der Verriegelungsplatte 12 abstehende Zähne 18 greifen durch schlitzförmige Öffnungen 20 der zweiten Sitzschiene 8 hindurch in Rasten 21 der ersten Sitzschiene 5. Der Führungsfinger 14 ragt vorliegend aus dem Schienenprofil heraus und steht über die zweite Sitzschiene 8 etwas über.

Der Führungsfinger 14 ist in einem hülsenartigen Fortsatz eines Führungsteils 24 geführt, welches aus Kunststoff spritzgegossen ist. In dieses Führungsteil 24 ist ferner die Verriegelungsfeder 16 mit einem Ende eingespritzt, das andere Ende ist mit der Verriegelungsplatte 12 verbunden.

Für eine nahezu stufenlose Verriegelung und zur Erhöhung der Längsverriegelungsfestigkeit weist die Schienenverriegelung 10 in Längsrichtung vorliegend hintereinander drei Verriegelungsplatten 12 auf. Alle den drei Verriegelungsplatten 12 zugeordneten Führungsfinger 14 sind vorliegend in einem einzigen Führungsteil 24 mit drei hülsenartigen Fortsätzen geführt. Es ist aber auch möglich, dass eine andere Anzahl von Verriegelungsplatten vorgesehen ist, beispielsweise nur eine einzige Verriegelungsplatte pro Schienenverriegelung. Ebenso kann jede Verriegelungsplatte mit einem eigenen Führungsteil verbunden sein. Auch die Zahl der Führungsfinger und/oder Verriegelungsfedern je Verriegelungsplatte kann größer sein.

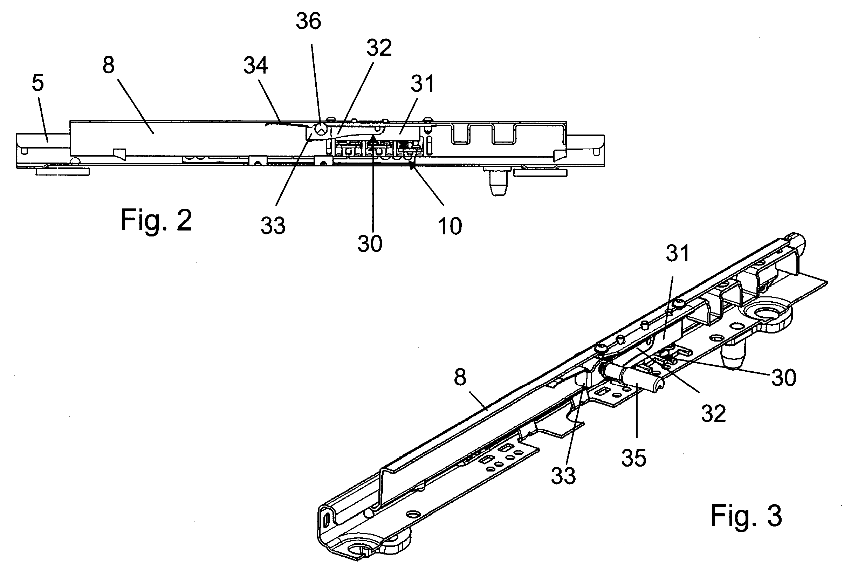

Das gemeinsame Führungsteil 24 für die drei Verriegelungsplatten 12 ist, wie aus Fig. 3 ersichtlich, mittels zweier von oben eingeschraubter Schrauben 26 im Profil der zweiten Sitzschiene 8 gehalten, wobei die Führungsfinger 14 durch das Führungsteil 24 hindurchragen und durch entsprechende Öffnungen in der zweiten Sitzschiene 8 nach außen ragen.

Es ist jedoch durch das Vorsehen eines entsprechenden Führungsteils mit hülsenartigen Fortsätzen auch eine kürzere Führungsfingerlänge realisierbar, bei welcher die Führungsfinger nicht durch Öffnungen in der zweiten Sitzschiene 8 ragen, d.h. die Führungsfingerenden bewegen sich innerhalb der hülsenartigen Fortsätze.

Die Schienenverriegelung 10 ist teilweise von einer Entriegelungseinheit 30 umgeben, welche vorliegend vollständig innerhalb der zweiten Sitzschiene 8 angeordnet ist. Die Entriegelungseinheit 30 weist zwei Seitenplatten 31 auf, welche sich oberhalb der Zähne 18 der Verriegelungsplatten 12 in Längsrichtung der Sitzschienen 5, 8 erstrecken. Im verriegelten Zustand liegen die beiden Seitenplatten 31 an der Unterseite des Führungsteils 24 an und sind zumindest etwas von den Verriegelungsplatten 12 beabstandet, können ggf. aber auch lose an denselben anliegen. Diese Seitenplatten 31 bestehen vorliegend aus Kunststoff, können jedoch auch aus einem anderen geeigneten Material bestehen, wie beispielsweise Metall.

Die Entriegelungseinheit 30 weist ferner zwei schwenkbar mit den Seitenplatten 31 an seitlich nach außen vorstehenden Zapfen verbundene und um eine senkrecht zur Längsrichtung der Sitzschienen 5, 8 angeordnete Betätigungs-Schwenkachse B verschwenkbare Hebelarme 32 auf, mittels welcher die Seitenplatten 31 auf und ab bewegbar sind. Die beiden Hebelarme 32 sind vorliegend auf der von den Seitenplatten 31 beabstandeten Seite durch einen Bügelbereich 33 miteinander starr verbunden, können jedoch auch getrennt ausgebildet sein.

Die Hebelarme 32 bestehen vorliegend aus einem gestanzten und umgeformten Stahlblech. Bei ausreichender Festigkeit, insbesondere mit entsprechenden Einsätzen und/oder Verstärkungen in besonders belasteten Bereichen, können die Hebelarme beispielsweise auch aus Kunststoff bestehen. Natürlich sind auch andere Materialien mit geeigneten Festigkeitseigenschaften möglich.

Im Bügelbereich 33 zwischen den beiden Hebelarmen 32 ist eine Rückstellfeder 34, vorliegend gebildet durch eine Blattfeder, angeordnet, welche sich an der Innenfläche der zweiten Sitzschiene 8 abstützt.

Alternativ zu einer Blattfeder kann auch eine andere geeignete Feder vorgesehen sein, welche sich bevorzugt an der zweiten Sitzschiene abstützt, um eine Rückstellkraft auf die Hebelarme 32 auszuüben. Die Feder muss nicht notwendigerweise am Bügelbereich 33 angreifen, sondern kann beispielsweise auch direkt mit den Hebelarmen 32 zusammenwirken, insbesondere wenn diese getrennt ausgebildet sind.

Die beiden Hebelarme 32 der Entriegelungseinheit 30 sind form-, kraft- und/oder stoffschlüssig, insbesondere bevorzugt jedoch rein formschlüssig, über ein Kraftübertragungselement 35 mit besagter Betätigungsanordnung 11 verbunden. Vorliegend dient als Kraftübertragungselement 35 eine Welle 36, wobei die Kraftübertragung formschlüssig mittels eines an der Welle 36 ausgebildeten sternförmigen Keilwellenprofils 37 erfolgt. Alternativ zu einem sternförmigen Keilwellenprofil 37 sind auch beliebige andere Voll- oder Hohlprofile denkbar, deren Querschnitt sich von der Kreisform unterscheidet und die eine möglichst spielfreie Kraftübertragung ermöglichen. Das Keilwellenprofil 37 erstreckt sich über eine Länge, welche etwas größer als der Abstand der voneinander abgewandten Seiten der beiden Hebelarme 32 ist. Auf der Welle 36 sitzt, vorliegend mit etwas Spiel, eine Hülse 40, welche als Abstandshalter für die beiden Hebelarme 32 dient. Die Hülse kann auch auf die Welle aufgepresst sein oder mit viel Spiel lose auf der Welle sitzen.

Die Welle 36 ist unter Zwischenlage von Lagern 42, welche beiderseits des Keilwellenprofils 37 positioniert sind, in seitlichen Öffnungen der zweiten Sitzschiene 8 gelagert, wobei der entsprechende Bereich der zweiten Sitzschiene 8 aus der ersten Sitzschiene 5 herausragt. Die Welle 36 ist mehrfach abgesetzt, wobei der über die zweite Sitzschiene 8 hinausragende erste Endbereich 38 endseitig angefast und leicht beabstandet hiervon mit einer Ringnut ausgebildet ist. Das erste Lager 42, welches auf dieser Seite angeordnet ist, weist an seiner Innenmantelfläche eine entsprechende umlaufende Rippe auf, welche beim Zusammenbau in der Ringnut positioniert wird und so die Welle 36 im ersten Lager 42 sichert. Das erste Lager 42 seinerseits weist an seiner Außenmantelfläche eine umlaufende Ringnut auf, in welcher die Seitenwand der zweiten Sitzschiene 8 positioniert ist. Diese Anordnung hält die Welle 36 in der zweiten Sitzschiene 8. Benachbart des gelagerten Bereichs ist besagtes Keilwellenprofil 37 angeordnet, wobei ein entsprechender Fußkreisdurchmesser des Keilwellenprofils 37 vorliegend etwa dem Außendurchmesser entspricht, auf welchem das erste Lager 42 sitzt. Das Keilwellenprofil 37 selbst ist in entsprechend profilierten Öffnungen der Hebelarme 32 positioniert. Auf ihm sitzt die Hülse 40. Das zweite Lager 42 ist benachbart des Keilwellenprofils 37 in einem Bereich mit einem Außendurchmesser, welcher vorliegend etwas geringer als der Außendurchmesser des Keilwellenprofils 37 ist, angeordnet. Das zweite Lager 42 stützt sich an einer weiteren Stufe ab.

Die Welle 36 endet am zweiten Endbereich 39 in einem zylinderförmigen Bereich mit einer sich in Längsrichtung der Welle 36 erstreckenden V-förmigen Nut 39', welche vorliegend einen 90°-Winkel aufweist. Auf diesen zweiten Endbereich 39 der Welle 36 wird im Folgenden auch als Betätigungsende Bezug genommen. Insgesamt ist somit die Welle 36 bitartig ausgebildet. Für die Montage der Lager 42 werden dieselben leicht elastisch geweitet und über die Welle 36 geschoben. Hierbei können die Lager 42 auch geschlitzt ausgebildet sein.

Der Winkel der V-förmigen Nut 39' kann sich auch von einem rechten Winkel unterscheiden. Ferner sind auch gekrümmte Wandverläufe denkbar.

Auf dem Betätigungsende der Welle 36 sitzt ein Übertragungsrohr 44, welches fest mit einem Betätigungshebel 46 verbunden ist, beispielsweise hiermit verschweißt ist. Ferner ist eine Misuse-Überlastungsschutzfeder 48 in Gestalt einer Blattfeder vorgesehen, welche fest mit dem Betätigungshebel 46 verbunden ist.

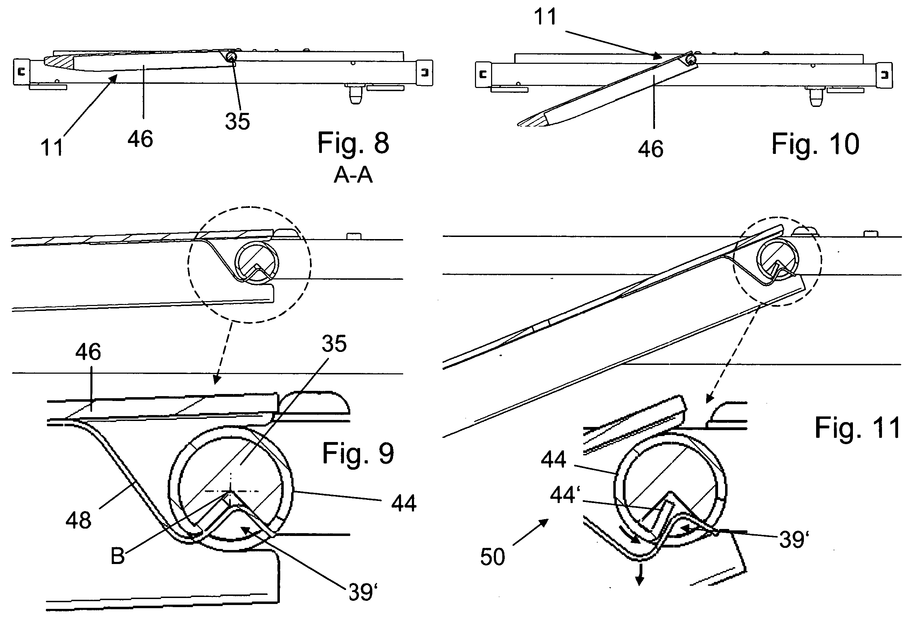

Das Übertragungsrohr 44 weist in seinem schienenseitigen Ende einen 3/4-kreisförmigen Bereich auf, welcher durch einen Längsschnitt im Rohr und Einbiegen der so gebildeten, aber gekürzten Lasche 44' um vorliegend 90° gebildet ist. Wie aus Fig. 9 ersichtlich, liegt im normalen Zustand die Lasche 44' an einer der Nutwände der Nut 39' an, nämlich auf der in Bewegungsrichtung des Betätigungshebels 46 angeordneten Seite der Nut 39'. Alternativ sind auch andere Biegewinkel der Lasche 44' möglich.

Der übertragungsrohrseitige Endbereich der Misuse-Überlastungsschutzfeder 48 ist derart gebogen, dass er sowohl in einer normalen Anordnung des Betätigungshebels 46 im verriegelten Zustand der Schienenverriegelung 10 als auch im entriegelten Zustand derselben unter Vorspannung an der Lasche 44' und der gegenüberliegenden Wand der Nut 39' anliegt, vorliegend flächig anliegt. Diese Anordnung bildet eine Überlastsicherung 50, auf deren Funktion an späterer Stelle näher eingegangen wird.

Die Montage der gesamten Anordnung erfolgt, indem in einem ersten Schritt die Entriegelungseinheit 30 samt Schienenverriegelung 10 in der zweiten Sitzschiene 8 positioniert und mittels der Schrauben 26 von oben her mittels Einschraubens der Schrauben 26 ins Führungsteil 24 befestigt wird. Das erste Lager 42 kann zuvor oder direkt anschließend in die entsprechende Öffnung der zweiten Sitzschiene 8 eingesetzt werden, während das zweite Lager 42 vor der Montage an der zweiten Sitzschiene 8 direkt auf das Kraftübertragungselement 35 geschoben wird. Nachfolgend wird der erste Endbereich 38 des Kraftübertragungselements 35 seitlich durch die dem zweiten Lager 42 zugeordnete Öffnung der zweiten Sitzschiene 8 und die beiden Hebelarme 32 samt Hülse 40 geschoben, wobei, wenn das Keilwellenprofil 37 die entsprechende Öffnung des ersten Hebelarms 32 erreicht, eine definierte Ausrichtung in Bezug auf die Hebelarme 32 erfolgt. Das Einschieben endet, sobald die am Innenumfang umlaufende Rippe des ersten Lagers 42 in die Ringnut benachbart des ersten Endbereichs 38 einschnappt und dadurch die Anordnung drehbar fixiert. Anschließend wird das Übertragungsrohr 44 der Betätigungsanordnung 11 in geeigneter Ausrichtung auf den zweiten Endbereich 39 geschoben, wobei der gebogene Endbereich der Misuse-Überlastungsschutzfeder 48 in die Nut 39' einfällt.

Anschließend wird die zweite Sitzschiene 8 mitsamt der Schienenverriegelung 10 und Entriegelungseinheit 30 in die erste Sitzschiene 5 eingeführt.

Die Funktion der gesamten Anordnung ist Folgende:
In der verriegelten Ausgangsstellung ist die Schienenverriegelung 10 aktiviert, d.h. es greifen die Zähne 18 mindestens einer der Verriegelungsplatten 12 in Rasten 21 der ersten Sitzschiene 5.

Wird der Betätigungshebel 46 der Betätigungsanordnung 11, welcher auch mit einem Griff versehen sein kann, zur Betätigung der Entriegelungseinheit 30 angehoben, also in Fig. 9 im Uhrzeigersinn um die Betätigungs-Schwenkachse B gedreht, so nimmt die Lasche 44' das Kraftübertragungselement 35 mit, d.h. die Welle 36 wird im Uhrzeigersinn gedreht. Aufgrund dieser Drehbewegung nimmt das Keilwellenprofil 37 die beiden Hebelarme 32 mit, wodurch die hieran schwenkbar angebrachten Seitenplatten 31 sich absenken und die Verriegelungsplatten 12 entgegen der hochziehenden Federkraft der Verriegelungsfedern 16 nach unten aus den Rasten 21 drücken. Sobald alle Zähne 18 außerhalb der Rasten 21 sind, ist die Verriegelung gelöst und die zweite Sitzschiene 8 mitsamt des Fahrzeugsitzes 3 kann relativ zur ersten Sitzschiene 5 verschoben werden. Die Rückstellfeder 34, welche am oberen Rand des Bügelbereichs 33 zwischen den beiden Hebelarmen 32 anliegt, wirkt ab einem vorgegebenen Drehwinkel der Hebelarme 32 einer weiteren Drehbewegung entgegen und unterstützt damit die Wirkung der Verriegelungsfedern 16.

Wird der Betätigungshebel 46 nach einer erfolgten Längsverstellung des Fahrzeugsitzes 3 losgelassen, so kehrt der Hebel auf Grund der Rückstellkraft der Verriegelungsfedern 16 und unterstützt durch die Federkraft der Rückstellfeder 34, wieder in seine untere Ausgangsstellung zurück.

Wird der Betätigungshebel 46 der Betätigungsanordnung 11 im Rahmen einer Fehlbedienung oder versehentlich weiter nach unten gedrückt, also ausgehend von Fig. 9 entgegen dem Uhrzeigersinn, so wird die Überlastsicherung 50 aktiv, wobei das Kraftübertragungselement 35 in seiner Stellung verbleibt, während sich das Übertragungsrohr 44 gemeinsam mit dem Betätigungshebel 46 um die Achse B dreht, so dass die Lasche 44' sich weg von der Wand der Nut 39' bewegt. Dadurch wird die Misuse-Überlastungsschutzfeder 48 teilweise aus der Nut 39' geschoben, wodurch sichergestellt wird, dass keine Kraft an das Kraftübertragungselement 35 übertragen wird, welche die Schienenverriegelung 10 oder die Entriegelungseinheit 30 beschädigen könnte.

Die Kraft der aus ihrer Ausgangsstellung in der Nut 39' teilweise herausgeschobenen Misuse-Überlastungsschutzfeder 48 wirkt der auf den Bedienhebel 46 wirkenden Fehlbedienungskraft etwas entgegen und stellt insbesondere sicher, dass - sobald keine Fehlbedienungskraft mehr wirkt bzw. dieselbe entsprechend klein wird - der Betätigungshebel 46 wieder in seine Ausgangsstellung gelangt, wobei der gebogene, übertragungsrohrseitige Endbereich der Misuse-Überlastungsschutzfeder 48 aufgrund der Federvorspannung wieder in seine Ausgangsstellung in der Nut 39' gedrückt wird. Der gebogene Endbereich der Misuse-Überlastungsschutzfeder 48 wirkt hierbei wie ein Keil. Diese Keilwirkung bewirkt, dass sich der freie Winkel zwischen der Lasche 44' und der ihr gegenüberliegenden Wand der Nut 39' wieder vergrößert, und dadurch sich das Übertragungsrohr 44 um das Kraftübertragungselement 35 zurückdreht, bis die Lasche 44' wieder in Anlage an die andere Wand der Nut 39' gelangt, wobei der Betätigungshebel 46 angehoben wird.

Obwohl vorstehend eine Erstreckung der Welle 36 quer durch die zweite Sitzschiene 8 beschrieben ist, kann der erste Endbereich 38 der Welle 36 auch innerhalb der zweiten Sitzschiene 8 enden. Die Lagerung der Welle 36 kann in diesem Fall beispielsweise nur durch die eine an der zweiten Sitzschiene 8 ausgebildeten Lagerstelle oder durch eine oder mehrere zusätzliche Lagerstellen außerhalb der zweiten Sitzschiene erfolgen. Die weitere Ausgestaltung, insbesondere die Ausgestaltung der Überlastsicherung, kann auf die vorstehend beschriebene Weise erfolgen.

Ferner kann anstelle eines punktsymmetrischen Keilwellenprofils auch eine asymmetrische Ausgestaltung vorgesehen sein, welche den Vorteil hat, dass zudem eine definierte Ausrichtung der Hebelarme in Bezug auf die Nut an der Welle möglich ist.

### Bezugszeichenliste

- 1: Längseinsteller
- 3: Fahrzeugsitz
- 5: erste Sitzschiene
- 8: zweite Sitzschiene
- 10: Schienenverriegelung
- 11: Betätigungsanordnung
- 12: Verriegelungsplatte
- 14: Führungsfinger
- 16: Verriegelungsfeder
- 18: Zahn
- 20: schlitzförmige Öffnung
- 21: Raste
- 24: Führungsteil
- 26: Schraube
- 30: Entriegelungseinheit
- 31: Seitenplatte
- 32: Hebelarm
- 33: Bügelbereich
- 34: Rückstellfeder
- 35: Kraftübertragungselement
- 36: Welle
- 37: Keilwellenprofil
- 38: erster Endbereich
- 39: zweiter Endbereich
- 39': Nut
- 40: Hülse
- 42: Lager
- 44: Übertragungsrohr
- 44': Lasche
- 46: Betätigungshebel
- 48: Misuse-Überlastungsschutzfeder
- 50: Überlastsicherung
- B: Betätigungs-Schwenkachse

## Patentansprüche

1. Längseinsteller für einen Fahrzeugsitz, insbesondere einen Kraftfahrzeugsitz, mit wenigstens einer mit der Fahrzeugstruktur zu verbindenden ersten Sitzschiene (5) und einer mit dem Fahrzeugsitz zu verbindenden zweiten Sitzschiene (8), die einander unter Bildung eines Schienenprofils wechselseitig umgreifen und relativ zueinander in Längsrichtung beweglich sind, und einer die Sitzschienen (5, 8) miteinander verriegelnden Schienenverriegelung (10), wobei die Schienenverriegelung (10) zumindest großteils innerhalb des durch die Sitzschienen (5, 8) gebildeten Schienenprofils angeordnet ist, eine Entriegelungseinheit (30) und eine Betätigungsanordnung (11) zur Betätigung der Entriegelungseinheit (30) vorgesehen sind, wobei die Entriegelungseinheit (30) zumindest großteils innerhalb des durch die Sitzschienen (5, 8) gebildeten Schienenprofils angeordnet ist, wobei ein Kraftübertragungselement (35) vorgesehen ist, welches die Betätigungsanordnung (11) mit der Entriegelungseinheit (30) verbindet, wobei das Kraftübertragungselement (35) von der Seite her in die zweite Sitzschiene (8) mit einem Ende eingeschoben ist, sich in das Schienenprofil der zweiten Sitzschiene (8) hinein oder durch die zweite Sitzschiene (8) hindurch erstreckt, innerhalb der zweiten Sitzschiene (8) mit der Entriegelungseinheit (30) zusammenwirkt, wobei eine formschlüssige Verbindung zwischen Kraftübertragungselement (35) und Entriegelungseinheit (30) vorgesehen ist, und das Kraftübertragungselement (35) gleichzeitig der schwenkbaren Lagerung der Betätigungsanordnung (11) dient, **dadurch gekennzeichnet, dass** die Entriegelungseinheit (30) mindestens eine Seitenplatte (31) aufweist, welche durch einen Hebelarm (32) absenkbar ist, um die Schienenverriegelung (10) außer Eingriff zu bringen.

2. Längseinsteller nach Anspruch 1, **dadurch gekennzeichnet, dass** das Kraftübertragungselement (35) zumindest teilweise durch eine Welle (36) gebildet ist, welche eine sich senkrecht zur Längsrichtung der Sitzschienen (5, 8) erstreckende Betätigungs-Schwenkachse (B) aufweist, wobei das Kraftübertragungselement (35) sich zumindest bis innerhalb der zweiten Sitzschiene (8) erstreckt, insbesondere quer durch die zweite Sitzschiene (8) hindurch.

3. Längseinsteller nach Anspruch 1 oder 2, **dadurch gekennzeichnet, dass** der Hebelarm (32) vollständig innerhalb des Schienenprofils angeordnet ist und in Verbindung mit dem Kraftübertragungselement (35) steht.

4. Längseinsteller nach Anspruch 3, **dadurch gekennzeichnet, dass** der Hebelarm (32) durch das Kraftübertragungselement (35) um eine konzentrisch zum Kraftübertragungselement (35) verlaufende Betätigungs-Schwenkachse (B) verschwenkbar ist.

5. Längseinsteller nach einem der vorhergehenden Ansprüche, **dadurch gekennzeichnet, dass** das Kraftübertragungselement (35) rein formschlüssig über ein Keilwellenprofil (37) mit dem Hebelarm (32) der Entriegelungseinheit (30) verbunden ist.

6. Längseinsteller nach Anspruch 5, **dadurch gekennzeichnet, dass** das Keilwellenprofil (37) sternförmig ausgebildet ist.

7. Längseinsteller nach einem der vorhergehenden Ansprüche, **dadurch gekennzeichnet, dass** die Schienenverriegelung (10) ein Führungsteil (24) aufweist, welches an der zweiten Sitzschiene (8) angebracht ist, welches Führungshülsen für Führungsfinger (14) aufweist.

8. Längseinsteller nach einem der vorhergehenden Ansprüche, **dadurch gekennzeichnet, dass** die Schienenverriegelung (10) ein Führungsteil (24) aufweist, welches an der zweiten Sitzschiene (8) angebracht ist, welches fest mit Verriegelungsfedern (16) verbunden ist, welche verriegelnde Elemente, insbesondere Verriegelungsplatten (12), in die Verriegelungsstellung ziehen.

9. Längseinsteller nach einem der vorhergehenden Ansprüche, **dadurch gekennzeichnet, dass** zwei auf dem Kraftübertragungselement (35) sitzende Hebelarme (32) vorgesehen sind, welche an einem Ende über einen Bügelbereich (33) miteinander verbunden sind.

10. Längseinsteller nach einem der vorhergehenden Ansprüche, **dadurch gekennzeichnet, dass** das Kraftübertragungselement (35) durch eine Welle (36) gebildet ist, die Welle (36) die Betätigungsanordnung (11) konzentrisch zu ihrer Schwenkachse lagert, wobei im Bereich der Lagerstelle zwischen dem Kraftübertragungselement (35) und der Betätigungsanordnung (11) eine Überlastsicherung vorgesehen ist, welche vor einer Überlastung in einer Richtung entgegen der normalen Betätigungsrichtung zum Entriegeln schützt.

11. Längseinsteller nach Anspruch 10, **dadurch gekennzeichnet, dass** Teil der Überlastsicherung ein mit einer V-förmigen Nut (39') ausgebildetes Ende des Kraftübertragungselements (35) ist, auf welchem ein Übertragungsrohr (44) sitzt, welches eine in die Nut (39') ragende Lasche (44') aufweist.

12. Längseinsteller nach Anspruch 11, **dadurch gekennzeichnet, dass** ferner eine Misuse-Überlastungsschutzfeder (48) mit einem V-förmig gebogenen Endbereich vorgesehen ist, welcher sich im normalen Benutzungszustand in die Nut (39') erstreckt.

13. Längseinsteller nach Anspruch 12, **dadurch gekennzeichnet, dass** im normalen Benutzungszustand der V-förmige gebogene Endbereich mit einer Seite an einer Wand der Nut (39') anliegt und mit der anderen Seite an der Lasche (44') des Übertragungsrohres (44) anliegt.

14. Längseinsteller nach einem der Ansprüche 11 bis 13, **dadurch gekennzeichnet, dass** bei einer Fehlbedienung die Lasche (44') außer Anlage an der Wand der Nut (39') gelangt und der V-förmig gebogene Endbereich der Misuse-Überlastungsschutzfeder (48) teilweise aus der Nut (39') geschoben wird.

15. Längseinsteller nach einem der vorhergehenden Ansprüche, **dadurch gekennzeichnet, dass** das Kraftübertragungselement (35) eine sich senkrecht zur Längsrichtung der Sitzschienen (5, 8) erstreckende Betätigungs-Schwenkachse (B) aufweist, wobei die Überlastsicherung eine relative Drehbewegung der Betätigungsanordnung (11) um die Betätigungs-Schwenkachse (B) in Gegenrichtung zur normalen Betätigungsrichtung ermöglicht, während der das Kraftübertragungselement (35) sich nicht oder nur unwesentlich um die Betätigungs-Schwenkachse (B) dreht.

## Claims

1. Longitudinal adjustor for a vehicle seat, in particular a motor vehicle seat, comprising at least one first seat rail (5) to be connected to the vehicle structure and at least one second seat rail (8) to be connected to the vehicle seat, which engage around one another to form a rail profile and are movable relative to one another in the longitudinal direction, and comprising a rail locking means (10) which locks the seat rails (5, 8) to one another, wherein the rail locking means (10) is arranged at least for the most part within the rail profile formed by the seat rails (5, 8), an unlocking unit (30) and an activation arrangement (11) for activating the unlocking unit (30) are provided, wherein the unlocking unit (30) is arranged at least for the most part within the rail profile formed by the seat rails (5, 8), wherein a force-transmitting element (35) is provided, which connects the activation arrangement (11) to the unlocking unit (30), wherein the force-transmitting element (35) is inserted by one end from the side into the second seat rail (8), extends into the rail profile of the second seat rail (8) or through the second seat rail (8), cooperates within the second seat rail (8) with the unlocking unit (30), wherein a positive connection is provided between the force-transmitting element (35) and unlocking unit (30), and the force-transmitting element (35), at the same time, is used for the pivotable mounting of the activation arrangement (11), **characterized in that** the unlocking unit (30) has at least one side plate (31), which can be lowered by a lever arm (32) so as to bring the rail locking means (10) out of engagement.

2. Longitudinal adjustor according to Claim 1, **characterized in that** the force-transmitting element (35) is formed at least in part by a shaft (36), which has an activation pivot axis (B) extending perpendicular to the longitudinal direction of the seat rails (5, 8), wherein the force-transmitting element (35) extends at least until within the second seat rail (8), in particular transversely through the second seat rail (8).

3. Longitudinal adjustor according to Claim 1 or 2, **characterized in that** the lever arm (32) is arranged completely within the rail profile and is connected to the force-transmitting element (35).

4. Longitudinal adjustor according to Claim 3, **characterized in that** the lever arm (32) is pivotable by the force-transmitting element (35) about an activation pivot axis (B) running concentrically with the force-transmitting element (35).

5. Longitudinal adjustor according to one of the preceding claims, **characterized in that** the force-transmitting element (35) is connected purely in a positive manner via a spline (37) to the lever arm (32) of the unlocking unit (30).

6. Longitudinal adjustor according to Claim 5 **characterized in that** the spline (37) is of star-shaped design.

7. Longitudinal adjustor according to one of the preceding claims, **characterized in that** the rail locking means (10) has a guide part (24), which is attached to the second seat rail (8) and has guide sleeves for guide fingers (14).

8. Longitudinal adjustor according to one of the preceding claims, **characterized in that** the rail locking means (10) has a guide part (24), which is attached to the second seat rail (8) and is connected fixedly to locking springs (16), which draw locking elements, in particular locking plates (12), into the locked position.

9. Longitudinal adjustor according to one of the preceding claims, **characterized in that** two lever arms (32) sitting on the force-transmitting element (35) are provided and are interconnected at one end via a stirrup region (33).

10. Longitudinal adjustor according to one of the preceding claims, **characterized in that** the force-transmitting element (35) is formed by a shaft (36), said shaft mounting the activation arrangement (11) concentrically with its pivot axis, wherein, in the region of the mounting point between the force-transmitting element (35) and the activation arrangement (11), an overload safeguard is provided, which protects against an overload in a direction against the normal direction of activation for unlocking.

11. Longitudinal adjustor according to Claim 10, **characterized in that** part of the overload safeguard is an end of the force-transmitting element (35) formed with a V-shaped groove (39'), a transmitting pipe (44) which has a tab (44') protruding into the groove (39') sitting on said end of the force-transmitting element.

12. Longitudinal adjustor according to Claim 11, **characterized in that** a misuse overload protection spring (48) with an end region bent in a V-shape is further provided and extends into the groove (39') in the normal state of use.

13. Longitudinal adjustor according to Claim 12, **characterized in that**, in the normal state of use, the end region bent in a V-shape rests via one side against a wall of the groove (39') and via the other side against the tab (44') of the transmission pipe (44).

14. Longitudinal adjustor according to one of Claims 11 to 13, **characterized in that**, in the event of maloperation, the tab (44') is brought away from the wall of the groove (39') and the end region of the misuse overload protection spring (48) bent in a V-shape is pushed partially from the groove (39').

15. Longitudinal adjustor according to one of the preceding claims, **characterized in that** the force-transmitting element (35) has an activation pivot axis (B) extending perpendicular to the longitudinal direction of the seat rails (5, 8), wherein the overload safeguard enables a relative rotary motion of the actuation arrangement (11) about the activation pivot axis (B) against the normal direction of activation, whereas the force-transmitting element (35) does not rotate, or only rotates to an insignificant extent, about the activation pivot axis (B).

## Revendications

1. Dispositif de réglage en longueur pour un siège de véhicule, en particulier un siège de véhicule automobile, avec au moins un premier rail de siège (5) à attacher à la structure du véhicule et un deuxième rail de siège (8) à attacher au siège de véhicule, qui s'emboîtent mutuellement l'un dans l'autre en formant un profilé de rail et qui sont mobiles l'un par rapport à l'autre en direction longitudinale, et avec un verrouillage de rail (10) verrouillant l'un à l'autre les rails de siège (5, 8), dans lequel le verrouillage de rail (10) est disposé au moins en grande partie à l'intérieur du profilé de rail formé par les rails de siège (5, 8), il est prévu une unité de déverrouillage (30) et un dispositif d'actionnement (11) pour l'actionnement de l'unité de déverrouillage (30), dans lequel l'unité de déverrouillage (30) est disposée au moins en grande partie à l'intérieur du profilé de rail formé par les rails de siège (5, 8), dans lequel il est prévu un élément de transmission de force (35) qui relie le dispositif d'actionnement (11) à l'unité de déverrouillage (30), dans lequel l'élément de transmission de force (35) est introduit par le côté dans le deuxième rail de siège (8) avec une extrémité, s'étend dans le profilé de rail du deuxième rail de siège (8) ou à travers le deuxième rail de siège (8), coopère à l'intérieur du deuxième rail de siège (8) avec l'unité de déverrouillage (30), dans lequel il est prévu un assemblage par emboîtement entre l'élément de transmission de force (35) et l'unité de déverrouillage (30), et l'élément de transmission de force (35) sert en même temps d'appui pivotant pour le dispositif d'actionnement (11), **caractérisé en ce que** l'unité de déverrouillage (30) présente au moins une plaque latérale (31), qui peut être abaissée par un bras de levier (32), pour lever le verrouillage de rail (10).

2. Dispositif de réglage en longueur selon la revendication 1, **caractérisé en ce que** l'élément de transmission de force (35) est formé au moins en partie par un arbre (36), qui présente un axe de pivotement d'actionnement (B) s'étendant perpendiculairement à la direction longitudinale des rails de siège (5, 8), dans lequel l'élément de transmission de force (35) s'étend au moins jusqu'à l'intérieur du deuxième rail de siège (8), en particulier transversalement à travers le deuxième rail de siège (8).

3. Dispositif de réglage en longueur selon la revendication 1 ou 2, **caractérisé en ce que** le bras de levier (32) est disposé entièrement à l'intérieur du profilé de rail et est en liaison avec l'élément de transmission de force (35).

4. Dispositif de réglage en longueur selon la revendication 3, **caractérisé en ce que** le bras de levier (32) peut pivoter par l'élément de transmission de force (35) autour d'un axe de pivotement d'actionnement (B) s'étendant de façon concentrique à l'élément de transmission de force (35).

5. Dispositif de réglage en longueur selon l'une quelconque des revendications précédentes, **caractérisé en ce que** l'élément de transmission de force (35) est assemblé purement par emboîtement, par l'intermédiaire d'un profil d'arbre cannelé (37) avec le bras de levier (32) de l'unité de déverrouillage (30).

6. Dispositif de réglage en longueur selon la revendication 5, **caractérisé en ce que** le profil d'arbre cannelé (37) est réalisé en forme d'étoile.

7. Dispositif de réglage en longueur selon l'une quelconque des revendications précédentes, **caractérisé en ce que** le verrouillage de rail (10) présente une pièce de guidage (24), qui est placée sur le deuxième rail de siège (8), et qui présente des douilles de guidage pour des doigts de guidage (14).

8. Dispositif de réglage en longueur selon l'une quelconque des revendications précédentes, **caractérisé en ce que** le verrouillage de rail (10) présente une pièce de guidage (24), qui est placée sur le deuxième rail de siège (8), et qui est reliée fixement à des ressorts de verrouillage (16), qui tirent des éléments de verrouillage, en particulier des plaques de verrouillage (12), dans la position de verrouillage.

9. Dispositif de réglage en longueur selon l'une quelconque des revendications précédentes, **caractérisé en ce qu'**il est prévu deux bras de levier (32) s'appuyant sur l'élément de transmission de force (35), qui sont reliés l'un à l'autre à une extrémité par une zone d'étrier (33).

10. Dispositif de réglage en longueur selon l'une quelconque des revendications précédentes, **caractérisé en ce que** l'élément de transmission de force (35) est formé par un arbre (36), l'arbre (36) supporte le dispositif d'actionnement (11) de façon concentrique à son axe de pivotement, dans lequel il est prévu dans la région du point d'appui entre l'élément de transmission de force (35) et le dispositif d'actionnement (11), une sécurité de surcharge, qui protège contre une surcharge dans une direction opposée à la direction d'actionnement normale pour le déverrouillage.

11. Dispositif de réglage en longueur selon la revendication 10, **caractérisé en ce qu'**une extrémité de l'élément de transmission de force (35) configurée en une rainure en forme de V (39'), sur laquelle s'appuie un tube de transmission (44) qui présente une patte (44') pénétrant dans la rainure (39'), fait partie de la sécurité de surcharge.

12. Dispositif de réglage en longueur selon la revendication 11, **caractérisé en ce qu'**il est en outre prévu un ressort de protection contre une surcharge abusive (48) avec une région d'extrémité courbée en forme de V, qui s'étend dans la rainure (39') dans l'état d'utilisation normal.

13. Dispositif de réglage en longueur selon la revendication 12, **caractérisé en ce que**, dans l'état d'utilisation normal, la région d'extrémité courbée en forme de V s'applique par un côté sur une paroi de la rainure (39') et s'appuie avec l'autre côté sur la patte (44') du tube de transmission (44).

14. Dispositif de réglage en longueur selon l'une quelconque des revendications 11 à 13, **caractérisé en ce que**, en cas de fausse manoeuvre, la patte (44') quitte l'appui sur la paroi de la rainure (39') et la région d'extrémité courbée en forme de V du ressort de protection contre une surcharge abusive (48) est glissée partiellement hors de la rainure (39').

15. Dispositif de réglage en longueur selon l'une quelconque des revendications précédentes, **caractérisé en ce que** l'élément de transmission de force (35) présente un axe de pivotement d'actionnement (B) s'étendant perpendiculairement à la direction longitudinale des rails de siège (5, 8), dans lequel la sécurité de surcharge permet un mouvement de rotation relatif du dispositif d'actionnement (11) autour de l'axe de pivotement d'actionnement (B) dans le sens opposé à la direction d'actionnement normale, pendant lequel l'élément de transmission de force (35) ne tourne pas ou ne tourne qu'insensiblement autour de l'axe de pivotement d'actionnement (B).
